# EUROPÄISCHE PATENTSCHRIFT

(11) **EP 1 308 089 B1**
(45) Veröffentlichungstag und Bekanntmachung des Hinweises auf die Patenterteilung: **19.04.2006**
(21) Anmeldenummer: 02023938.0
(22) Anmeldetag: 25.10.2002
(51) Int. Cl.: A01K 39/02, A01K 7/06

(54) **Tiertränke**
Animal drinker
Abreuvoir pour animaux

(30) Priorität: 02.11.2001 DE 10153595; 10.04.2002 DE 10215696
(43) Veröffentlichungstag der Anmeldung: 07.05.2003
(73) Patentinhaber: LUBING Maschinenfabrik Ludwig Bening GmbH & Co. KG, 49406 Barnstorf (DE)
(72) Erfinder: Schumacher, Egon, 49406 Barnstorf (DE)
(74) Vertreter: Möller, Friedrich

(56) Entgegenhaltungen:
- WO-A-00/51420
- WO-A-02/03784
- DE-A- 3 911 309
- DE-U- 7 031 234
- FR-A- 1 536 664
- GB-A- 1 566 746
- US-A- 3 428 028
- US-A- 3 483 847
- US-A- 4 246 870
- US-A- 4 444 149

## Beschreibung

Die Erfindung betrifft eine Tiertränke gemäß dem Oberbegriff des Anspruchs 1.

Eine solche Tiertränke ist aus der US-A-3 483 847 bekannt. Mit ihr können Tiere, insbesondere Geflügel wie zum Beispiel Puten, Hühner, Gänse, Enten und auch Küken der genannten Tiere ihren Wasserbedarf selbsttätig decken. Die Tiertränke verfügt dazu über eine längliche Wasserversorgungsleitung, an die vorzugsweise mehrere Tränkeventile mit regelmäßigen Abständen angeschlossen sind. Jedem Tränkeventil ist eine Wasserauffangschale zugeordnet. Darin sammelt sich vom Tränkeventil abgegebenes Wasser, und zwar insbesondere Spritzwasser, das nicht direkt getrunken wird. Sobald der Wasservorrat in der Wasserauffangschale ganz oder größtenteils verbraucht ist, können die Tiere vorzugsweise durch ihre Schnäbel ein jeweiliges Tränkeventil kurzzeitig unmittelbar öffnen und das Wasser direkt trinken. Diese bekannte Tiertränke bereitet jungen Tieren Probleme, ihren Wasserbedarf über Tränkeventile vollständig selbsttätig zu decken. Außerdem besteht das Problem der Verschmutzung der Wasserauffangschalen und des Verspritzens von Wasser, was insbesondere bei Puten sehr ausgeprägt ist.

Aus der US-A-4 246 870 ist eine Tiertränke bekannt, bei der das Tränkeventil einen verkippbaren, rohrförmigen Ventilstift aufweist, der durch ein rohrförmiges Betätigungsmittel bis in die Wasserauffangschale verlängert ist. Das Betätigungsmittel ist nur mit dem Ventilstift verbunden, wodurch das Betätigungsmittel und der Ventilstift unkontrolliert verschwenkbar sind, was vor allem kleineren Tieren die Betätigung des Tränkeventils erschwert.

Aus der DE 70 31 234 U ist eine Tiertränke bekannt, die über eine am Tränkeventil befestigte Wasserauffangschale verfügt An der Wasserauffangschale ist ein um eine feste Schwenkachse verschwenkbares Betätigungsmittel gelagert, womit der Ventilstift des Tränkeventils auf- und abbewegbar ist. Das Betätigungsmittel ist nur durch Hineindrücken in die Wasserauffangschale betätigbar, wodurch das bekannte Tränkeventil für kleine Tiere schwer betätigbar ist, insbesondere eine verhältnismäßig lange Anlemzeit für die Tiere erfordert.

Die WO-A-02 03784 hat eine Tiertränke zum Inhalt, bei der das Tränkeventil im Boden der Wasserauffangschale angeordnet ist. Ein Ventilstift des Tränkeventils muss vom Tier heruntergedrilckt werden, um einen Wasseraustritt aus dem Tränkeventil herbeizuführen.
Am Tränkeventil soll ein relativ hoher Wasserdruck anstehen, woraus eine hohe Kraft zum Öffnen des Tränkeventils resultiert. Dadurch eignet sich dieses bekannte Tränkeventil nur für große, schwere Tiere.

Der Erfindung liegt nun die Aufgabe zugrunde, eine Tiertränke zu schaffen, womit die Probleme der Verschmutzung und der Spritzwasserbildung zuverlässiger vermieden werden und womit insbesondere Puten, und zwar auch Putenküken, vorzugsweise während der gesamten Aufzucht und Mast seibttätig ihren Wasserbedarf in ausreichendem Maße decken können.

Eine Tiertränke zur Lösung der eingangs genannten Aufgabe weist die Merkmale des Anspruchs 1 auf. Dadurch, dass dem zum eigentlichen Öffnen und Schließen des Tränkeventils dienenden verschwenkbaren Ventilstift ein zusätzliches Betätigungsmittel zugeordnet ist, das um eine feste Schwenkachse beweglich ist, wird die Betätigung, nämlich das Öffnen und Schließen, des Tränkeventils erleichtert. Dadurch können vor allem Küken, und zwar insbesondere Putenküken, an der erfindungsgemäßen Tiertränke ihren Wasserbedarf zuverlässig decken. Das Betätigungsmittel dient gleichzeitig dazu, die Erreichbarkeit zur Bedienung des Tränkeventils für kleine Tiere zu verbessern.

Das Betätigungsmittel ist dem Ventilstift des jeweiligen Tränkeventils derart zugeordnet, dass durch eine Bewegung des Betätigungsmittels der Ventilstift in eine die Wasserabgabe zulassende Stellung bringbar ist. Das Betätigungsmittel lässt sich größer gestalten als der üblicherweise nur mit einem kurzen Betätigungsende aus dem Gehäuse des Tränkeventils herausragende Ventilstift. Das Betätigungsmittel bildet eine Art Hebel, der für die Tiere, insbesondere kleine Putenküken, nicht nur leichter erreichbar ist; vielmehr eine leichtere Bewegung des Ventilstifts zulässt. Es reicht dann praktisch zum Öffnen des Tränkeventils schon aus, wenn die Tiere mit vorzugsweise ihrem Schnabel oder Kopf das Betätigungsmittel nur berühren, um den Ventilstift in eine das Tränkeventil öffnende, also den Wasserausfluss freigebende Stellung zu bringen.

Gemäß einer bevorzugten Ausgestaltung der erfindungsgemäßen Tiertränke ist das Betätigungsmittel um eine horizontale Schwenkachse verschwenkbar, die quer zur Längsachse einer länglichen Wasserversorgungsleitung angeordnet ist. Das so verschwenkbare Betätigungsmittel lässt ein besonders leichtes Öffnen des Tränkeventils zu. Durch die horizontalgerichtete Anordnung der Schwenkachse quer zur Längsrichtung der Wasserversorgungsleitung ist das Betätigungsmittel nur in einer längs zur Wasserversorgungsleitung verlaufenden Achse in entgegengesetzten Richtungen verschwenkbar. Durch Längsschwingen der Wasserversorgungsleitung kann aufgrund der gezielten Anordnung der Schwenkachse das Betätigungsmittel selbsttätig, nämlich schwerkraftbedingt, in eine das Tränkeventil öffnende Stellung gelangen. Dadurch ist es möglich, bei frisch eingestallten Küken, insbesondere Putenküken, alle unbeweglich an der Wasserversorgungsleitung befestigte Wasserauffangschalen gleichzeitig mit einem gewissen Wasservorrat zu füllen, der die Küken an die Tiertränke heranlockt.

Die Schwenkachse, um die das Betätigungsmittel verschwenkbar ist, ist nach einer bevorzugten Ausgestaltung der Erfindung integraler Bestandteil einer Halterung, insbesondere einer Klemmhalterung, mit der das Betätigungsmittel an die Wasserversorgungsleitung oder auch das Tränkeventil bzw. eine Halterung des Tränkeventils an der Wasserversorgungsleitung, ankuppelbar ist Die vorzugsweise lösbar ausgebildete Halterung ermöglicht es, das Betätigungsmittel bei Bedarf zu Ersatzzwecken, aber insbesondere auch dann zu entfernen, wenn sich im Stall ältere, stärkere Tiere befinden, die die Tränkeventile ohne die Betätigungsmittel öffnen und schließen können sowie die Betätigung des Tränkeventils zum Abbau von Aggressionen brauchen. Solche Tiere können das Tränkeventil gegebenenfalls weiter öffnen als es durch das Betätigungsmittel möglich ist, so dass durch Entfemen des Betätigungsmittels sich der mit der Zeit größer werdenden Wasserbedarf der Tiere besser decken lässt.

Das Betätigungsmittel ist vorzugsweise als ein Betätigungshebel ausgebildet, der ein längliches Rohr aufweist. Durch dieses Rohr kann vom Tränkeventil abgegebene Flüssigkeit, insbesondere Wasser, gezielt in die unbewegliche Wasserauffangschale gelangen. Das Rohr leitet dabei das Wasser vom Tränkeventil in die darunter relativ zum Tränkeventil unbeweglich angeordnete Wasserauffangschale, so dass zuverlässig ein Verspritzen von Wasser vermieden wird, wodurch die damit verbundenen Nachteil nicht mehr auftreten können. Zu diesem Zweck ist vorzugsweise das Rohr von der Unterseite des Tränkeventils bis in die Nähe des Bodens der vorzugsweise senkrecht in einem Tränkeventil angeordneten Wasserauffangschale geführt. Dadurch lässt sich ein oberes Ende des Rohrs an das aus dem Gehäuse des Tränkeventils nach unten herausragende Betätigungsende des Ventilstifts des Tränkeventils ankoppeln. Die Folge ist, dass beim Verschwenken des Betätigungsmittels auch der Ventilstift verschwenkt und dadurch das Tränkeventil geöffnet wird. Das bis in die Nähe des Bodens der Wasserauffangschale geführte untere Ende des Rohrs kann als Begrenzung des Schwenkwinkels des Betätigungsmittels dienen, weil die Wasserschale relativ zum Betätigungsmittel unbeweglich ist, also die Bewegung des Betätigungsmittels nicht mitmacht, weil die Wasserauffangschale fest unter der Wasserversorgungsleitung angeordnet ist. Dadurch lässt sich der Öffnungsgrad des Tränkeventils dosiert einstellen. Es kann dann aus dem Tränkeventil pro Zeiteinheit nur noch eine bestimmte Menge an Flüssigkeit austreten, wodurch die Gefahr des Überlaufens der Wasserauffangschale wirksam vermieden wird. Gegebenenfalls kann das Rohr so ausgebildet sein, dass es sich verkürzen lässt, beispielsweise durch eine Axialverschiebung und dadurch die Menge des pro Zeiteinheit aus dem Tränkeventil austretenden Trinkwassers bedarfsweise veränderbar ist zur Anpassung an den vom Alter der Tiere abhängigen Wasserbedarf.

Bevorzugte Ausführungsbeispiele der erfindungsgemäßen Tiertränke werden nachfolgend anhand der Zeichnung näher erläutert. In dieser zeigen:
- Fig. 1: eine Seitenansicht eines Teils der Tiertränke (Tränkeelement),
- Fig. 2: eine vergrößerte Einzelheit II der Tiertränke die Fig. 1 in einem Teilschnitt,
- Fig. 3: eine Darstellung der Tiertränke analog zur Fig. 2 in einem anderen Teilschnitt,
- Fig. 4: einen Querschnitt durch die Tiertränke der Fig. 1,
- Fig. 5: eine alternative Tiertränke mit einem stangenartigen Betätigungsmittel in einer Ansicht analog zur Fig. 2,
- Fig. 6: eine Seitenansicht einer zur Aufzucht (bis zu sechs Wochen) dienenden Wasserauffangschale mit mittig geschnittener Wasseraufnahmemulde,
- Fig. 7: eine Draufsicht auf die Wasserauffangschale in der Fig. 5, und
- Fig. 8: eine Seitenansicht der Wasserauffangschale der Fig. 5 und 6.

Die hier gezeigte Tiertränke ist als sogenannte Strangtränke für die Bodenhaltung von Geflügel ausgebildet. Die Tiertränke ermöglicht es allen Arten von Geflügel, insbesondere auch Jungtieren (Küken), den Wasserbedarf selbsttätig zu decken. Insbesondere eignet sich die erfindungsgemäße Tiertränke auch für Puten und Putenküken.

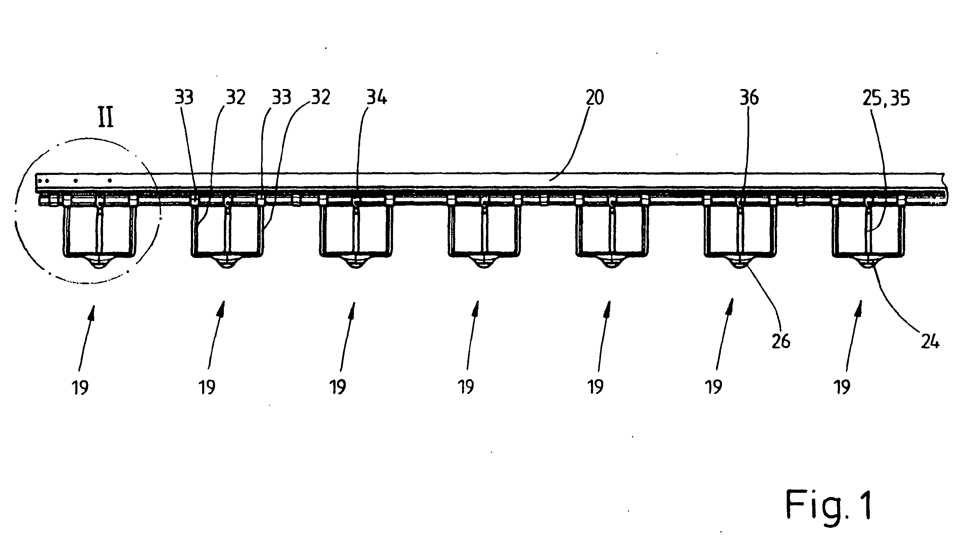

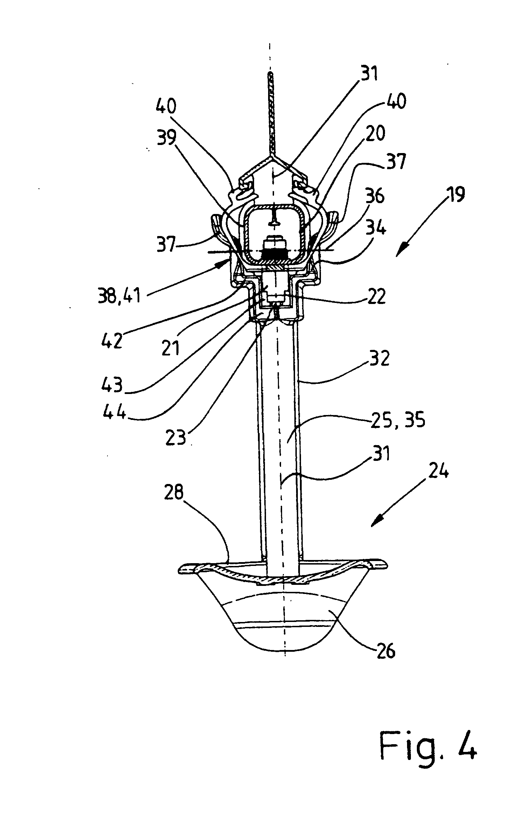

Die in den Fig. 1 bis 4 gezeigte Tiertränke verfügt über eine langgestreckte, rohrartige Wasserversorgungsleitung 20 mit mehreren voneinander beabstandeten Tränkestellen 19, die allesamt gleich ausgebildet sind. Die Wasserversorgungsleitung 20 ist an nicht gezeigten Trägerseilen in einem Stall hoizontalgerichtet mit entsprechendem (geringen) Abstand zum Boden angeordnet. In die Wasserversorgungsleitung 20 sind bei der hier gezeigten Tiertränke in regelmäßigen Abständen Tränkeventile 21 von unten eingeschraubt. Es handelt sich hierbei um an sich bekannte Tränkeventile 21 mit einem teilweise ein Außengewinde aufweisenden Gehäuse zum Einschrauben in entsprechende Gewindebohrungen der Wasserversorgungsleitung 20. Die vorzugsweise untereinander gleich ausgebildeten Tränkeventile 21 verfügen über einen Ventilstift, der mit einem Betätigungsende 23 unten aus dem Gehäuse 22 herausragt. Durch mindestens ein vom Betätigungsende 23 aus erfolgendes Verschwenken des Ventilstifts kann das jeweilige Tränkeventil 21 geöffnet werden, wodurch von der Wasserversorgungsleitung 20 den Tränkeventilen 21 zugeführtes Wasser unten aus den Tränkeventilen 21 in dosierten Mengen ausströmen kann. Wird die Betätigung des Ventilstifts aufgehoben, schließt das Tränkeventil 21 selbsttätig, wodurch der weitere Wasser-Ausfluss aus dem Tränkeventil 21 unterbrochen wird.

Jedem Tränkeventil 21 ist eine Wasserauffangschale 24 zugeordnet. Die vorzugsweise gleich ausgebildeten Wasserauffangschalen 24 aller Tränkestellen 19 sind mittig mit Abstand unter den Tränkeventilen 21 angeordnet. Im gezeigten Ausführungsbeispiel sind die Wasserauffangschalen 24 lösbar, aber ortsfest und unbeweglich, mit der Wasserversorgungsleitung 20 verbunden. Des Weiteren ist erfindungsgemäß jedem Tränkeventil 21 ein Betätigungsmittel zugeordnet, das als ein rohrartiger Betätigungshebel 25 oder als stangenartiger Betätigungshebel 50 ausgebildet ist. Der Betätigungshebel 25 ist relativ zur jeweiligen Wasserauffangschale 24 schwenkbar am oder im Bereich der Wasserversorgungsleitung 20 gelagert und in einem oberen Bereich an das Betätigungsende 23 des Ventilstifts jedes Tränkeventils 21 angekoppelt. Der Betätigungshebel 50 ist mit dem Betätigungsende 23 des Ventilstifts verbunden. Die Betätigungshebel 25 bzw. 50 sind vom jeweiligen Tränkeventil 21 bis in die Wasserauffangschale 24 geführt und verlängern dadurch praktisch das Betätigungsende 23 eines jeden Ventilstifts bis in den Bereich der Wasserauffangschale 24. Durch die feste Anordnung jeder Wasserauffangschale 24 an der Wasserversorgungsleitung 20 ist nur der Betätigungshebel 25 verschwenkbar, nicht aber auch die ihm jeweils zugeordnete Wasserauffangschale 24.

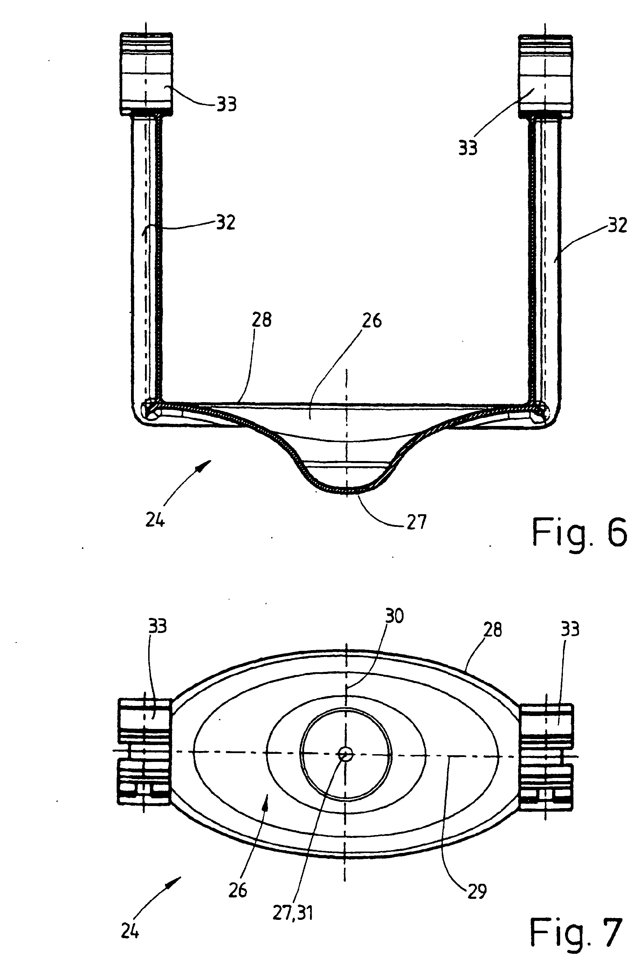

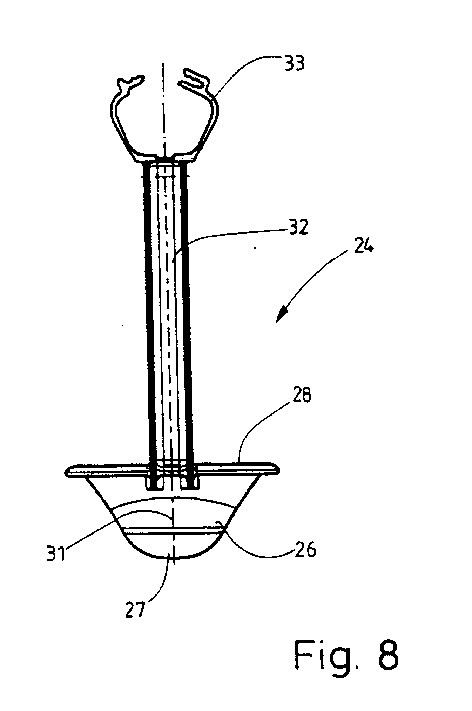

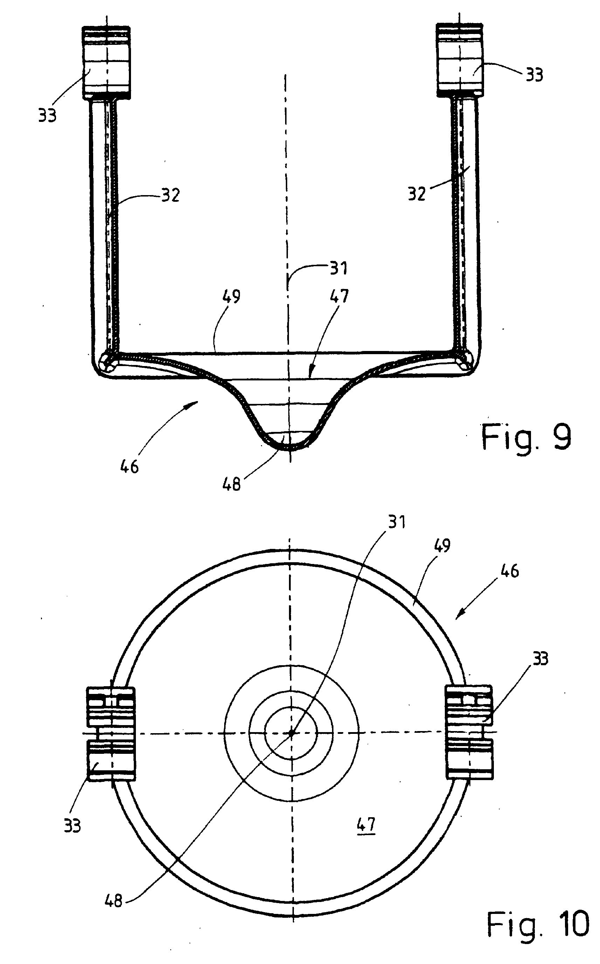

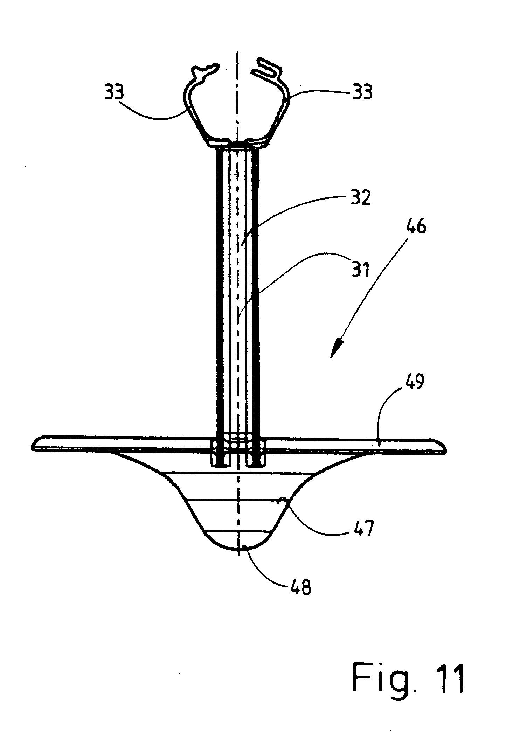

Die in den Fig. 6 bis 8 detailliert dargestellte Wasserauffangschale 24 ist erfindungsgemäß besonders zur Wasserversorgung kleiner, junger Tiere, und zwar insbesondere die Aufzucht von Putenküken, ausgebildet. Die selbstständige Wasserversorgung von Putenküken mit Tiertränken der hier beschriebenen Art hat sich bisher als sehr problematisch erwiesen, weil die Putenküken wenig lernfähig und scheu sind. Die besondere Gestaltung der Wasserauffangschale 24, und zwar insbesondere die zur Aufnahme eines Wasservorrats dienenden Wasseraufnahmemulde 26 derselben, hat sich auch bei der selbsttätigen Wasserversorgung von insbesondere Putenküken, als praktikabel erwiesen.

Die Wasseraufnahmemulde 26 der hier gezeigten Wasserauffangschale 24 verfügt über eine längliche, schiffchenartige Gestalt. Dazu ändert sich die Querschnittsgestalt der Wasseraufnahmemulde 26 von der tiefsten Stelle 27 im Bodenbereich bis zum oberen Rand 28 hin, und zwar vorzugsweise kontinuierlich. Ein von der tiefsten Stelle 27 ausgehender unteren Teil der Wasseraufnahmemulde 26 ist mit einem kreisrunden Querschnitt versehen. Dieser kreisrunde Querschnitt geht zum oberen Rand 28 hin kontinuierlich über in einen elliptischen (oder auch ovalen) Querschnitt. Dabei nimmt zum oberen Rand 28 hin das Verhältnis der längeren Achse 29 zur kürzeren Achse 30 des elliptischen Querschnitts zu, das heißt die elliptische Querschnittsgestalt der Wasseraufnahmemulde 26 wird zum oberen Rand 28 hin kontinuierlich ausgeprägter. Durch die sich ändernden Querschnittsgestalten der Wasseraufnahmemulde 26 ändert sich nicht nur die Größe, sondern auch die Gestalt der Wasseroberfläche des sich in der Wasseraufnahmemulde 26 befindlichen Trinkwassers bei zum Rand 28 hin höher werdendem Wasserstand. Insbesondere nimmt das Volumen des Wassers in der Wasseraufnahmemulde 26 mit höherem Wasserstand überproportional zu. Bei niedrigem Wasserstand befindet sich in der Wasseraufnahmemulde 26 nur noch eine verhältnismäßig geringe Restwassermenge. Diese Restwassermenge nimmt den unteren, kreisrunden Teil der Wasseraufnahmemulde 26 ein, so dass bei niedrigem Wasserstand in der Wasserauffangschale 24 die Wasseroberfläche der Wasseraufnahmemulde 26 eine kreisförmige Fläche aufweist, die sich nur in geringem Abstand von der die Längsmittelachse des jeweiligen Tränkeventils 21 nach unten verlängernden, vertikalen Längsmittelachse 31 der Wasseraufnahmemulde 26 erstreckt. Ist die Wasseraufnahmemulde 26 hingegen bis nahezu zum Rand 28 mit Wasser gefüllt, hat die Wasseroberfläche eine längliche, elliptische Gestalt. Diese Wasseroberfläche ist um ein Vielfaches größer als die kreisförmige Wasseroberfläche nahe der tiefsten Stelle 27 der Wasseraufnahmemulde 26 (Fig. 7). Auf diese Weise ist das Wasservolumen in der Wasseraufnahmemulde 26 bei doppelt so hohem Wasserstand wesentlich mehr als doppelt so groß.

Die Wasserauffangschale 24 verfügt an gegenüberliegenden, schmalen Endbereich des elliptischen Rands 28 der Wasseraufnahmemulde 26 über zwei parallele Tragarme 32. Die gleich ausgebildeten Tragarme 32 erstrecken sich senkrecht in Richtung zur Wasserversorgungsleitung 20. Die oberen Enden der Tragarme 32 sind mit jeweils einem Clipverschluss 33 versehen. Die gleich ausgebildeten Clipverschlüsse 33 dienen dazu, die Wasserauffangschale 24 über die Tragarme 32 lösbar mit der Wasserversorgungsleitung 20 zu verbinden. Im geschlossenen Zustand umgreifen die Clipverschlüsse 33 die Wasserversorgungsleitung 20 vollständig.

Die gesamte Wasserauffangschale 24 ist einstückig aus Kunststoff, und zwar vorzugsweise einem thermoplastischen Kunststoff, gebildet. Die Wasserauffangschale 24 weist eine dunkle Farbe, insbesondere eine dunkelblaue Farbe, auf. Eine solche Farbe bildet keinen Kontrast zur Einstreu (zum Beispiel Späne) im Stall, wodurch die Wasserauffangschale insbesondere von jungen Putenküken nicht auffällig wahrnehmbar ist und dadurch keinen Anreiz bildet.

Durch die Anordnung der Tragarme 32 an den schmalen Endbereichen der Wasseraufnahmemulde 26 wird die lange Achse 29 derselben längs zur Wasserversorgungsleitung 20 ausgerichtet, so dass bei unter der Wasserversorgungsleitung 20 starr, also unverschwenkbar, befestigter Wasserauffangschale 24 die längliche Wasseraufnahmemulde 26 sich in Richtung der Wasserversorgungsleitung 20 erstreckt. Vorzugsweise befindet sich die längere Achse 29 der Wasseraufnahmemulde 26 senkrecht unter der Längsmittelachse der Wasserversorgungsleitung 20, wobei die Ebene des Randes 28 der Wasseraufnahmemulde 26 parallel zur Längsachse der Wasserversorgungsleitung 20 verläuft. Bei üblicherweise horizontal gerichteter Wasserversorgungsleitung 20 befindet sich somit auch die durch den Rand 28 der Wasseraufnahmemulde 26 aufgespannte Ebene in einer Horizontalen.

Der vollständig aus Kunststoff, und zwar insbesondere thermoplatischem Kunststoff, gebildete Betätigungshebel 25 verfügt über ein oberes Gelenkteil 34 und ein darunter angeordnetes Rohr 35. Das Gelenkteil 34 und das Rohr 35 sind einstückig miteinander verbunden. Der Betätigungshebel 25 ist mit dem Gelenkteil 34 um eine horizontale Schwenkachse 36 bewegbar mit der Wasserversorgungsleitung 20 verbunden. Die Schwenkachse 36 verläuft quergerichtet zur Längsachse der Wasserversorgungsleitung 20. Außerdem verläuft die Schwenkachse 36 quer durch die vertikale Längsmittelachse des Tränkeventils 21 jeder Tränkestelle 19. Im gezeigten Ausführungsbeispiel befindet sich die Schwenkachse 36 etwas unterhalb der Längsmittelachse der Wasserversorgungsleitung 20, und zwar etwa auf der Höhe einer Unterseite der Wasserversorgungsleitung 20. Auf diese Weise ist der Betätigungshebel 25 nur in einer sich mittig durch die Wasserversorgungsleitung 20 erstreckenden vertikalen Ebene verschwenkbar, und zwar in entgegengesetzten Richtungen. In anderen Richtungen ist der Betätigungshebel 25 im Wesentlichen unbeweglich.

Das Gelenkteil 34 des Betätigungshebels 25 ist gabelförmig mit einem im Wesentlichen U-förmigen Querschnitt ausgebildet. Zwei parallele, aufrechte Schenkel 37 des Gelenkteils 34 befinden sich auf gegenüberliegenden Seiten der Wasserversorgungsleitung 20. Jeder dieser Schenkel 37 verfügt über eine Durchgangsbohrung 38. Die Durchgangsbohrungen 38 beider Schenkel 27 liegen auf einer gemeinsamen Achse, die der Schwenkachse 36 entspricht.

Im gezeigten Ausführungsbeispiel ist im Bereich des jeweiligen Tränkeventils 21 ein Befestigungsteil 39 vorgesehen, das die Wasserversorgungsleitung 20 schellenartig umgibt und durch einen Clipverschluss 40 bei Bedarf von der Wasserversorgungsleitung 20 lösbar ist. Das Befestigungsteil 39 weist an gegenüberliegenden Seiten vorstehende Achsstummel 41 auf, die ebenso wie die Durchgangsbohrungen 38 des Gelenkteils 34 des Betätigungshebels 25 auf der Schwenkachse 36 liegen. Die Durchgangsbohrungen 38 sind derart korrespondierend zu den Achsstummeln 41 ausgebildet, dass die Achsstummel 41 mindestens teilweise von einer Seite in die jeweilige Durchgangsbohrung 38 eingreifen und dadurch eine Verbindung des Betätigungshebels 25 mit dem Befestigungsteil 39 und hierüber mit der Wasserversorgungsleitung 20 zustande kommt. Des Weiteren sind die Durchgangsbohrungen 38 und die Achsstummel 41 so bemessen, dass sie eine zwängungsfreie, leichte Verschwenkung des Betätigungshebels 25 zulassen. Durch eine elastische Ausbildung der Schenkel 37 lassen sich durch Rasten die Achsstummel 41 des Befestigungsteils 39 mit den Durchgangsbohrungen 38 des Gelenkteils 34 in und außer Verbindung bringen. Auf diese Weise wird eine lösbare Gelenkverbindung zwischen dem Betätigungshebel 25 und der Wasserversorgungsleitung 20 bzw. dem Befestigungsteil 39 geschaffen, die eine rasche und einfache Montage und Demontage des Betätigungshebels 25 zulässt.

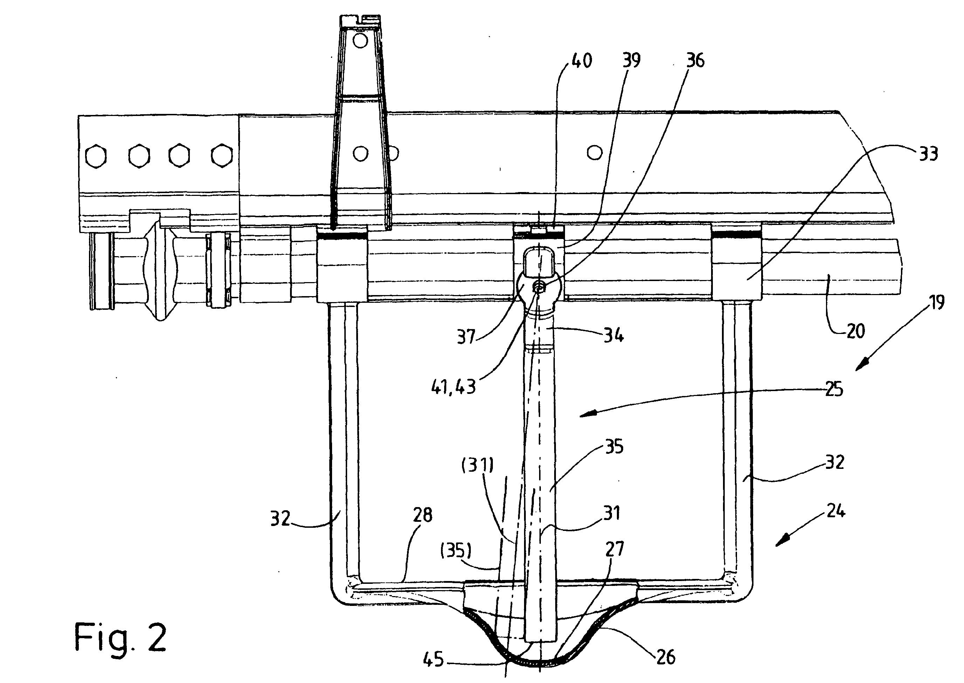

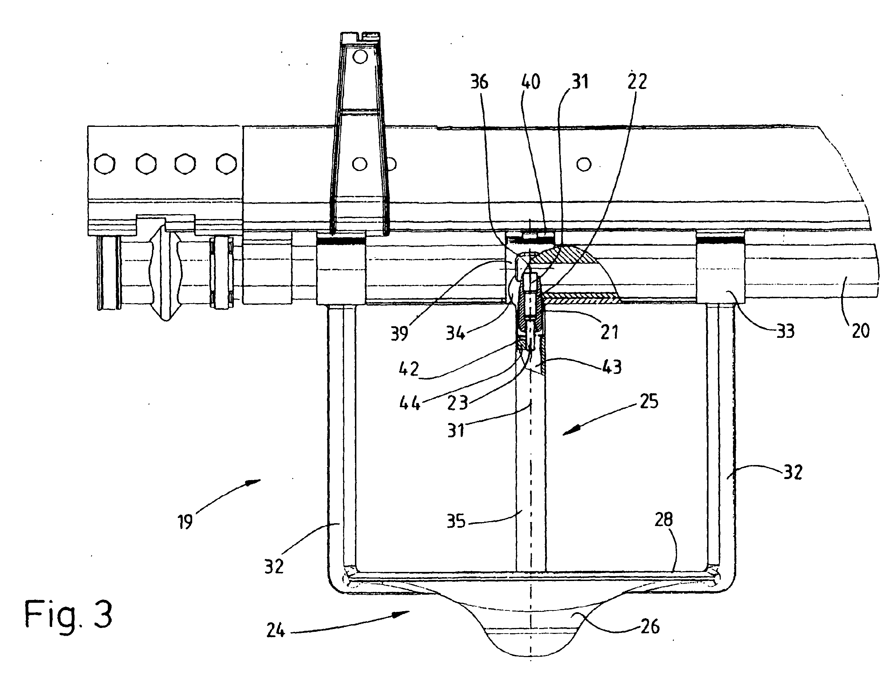

Das Gelenkteil 34 und das Rohr 35 sind verbunden im Bereich eines Stegs 42 zwischen den Schenkeln 37 des Gelenkteils 34. Der Steg 42 weist eine mittige Durchgangsbohrung 43 auf, die das obere Ende des Rohrs 35 für einen Wasserdurchfluss offen lässt. Im Bereich der Durchgangsbohrung 43 des Stegs 42 erfolgt eine Ankopplung des Betätigungshebels 25 an das Betätigungsende 23 des Ventilstifts des Tränkeventils 21. Zu diesem Zweck ist die Durchgangsbohrung 43 im Steg 42 bereichsweise mit beispielsweise radialgerichteten Rippen 44 (in der Fig. 3 ist aus Darstellungsgründen nur eine Rippe 44 gezeigt) versehen. Durch mindestens drei solcher sternförmig angeordneter Rippen 44 kommt eine nahezu formschlüssige Ankopplung des Betätigungshebels 25 an das Betätigungsende 23 des Tränkeventils 21 zustande. Bei einem Verschwenken des Betätigungshebels 25 wird hierdurch das Betätigungsende 23 mit verschwenkt und dadurch das Tränkeventil 21 geöffnet. Das Tränkeventil 21 bleibt so lange geöffnet, wie der Betätigungshebel 25 verschwenkt ist (Strichpunktdarstelllung in der Fig. 2). Durch Loslassen des Betätigungshebels 25 kehrt dieser schwerkraftbedingt selbsttätig in seine senkrechte Ausgangsstellung (Fig. 2) zurück, wodurch das Tränkeventil 21 wieder in seine Schließstellung gelangt. Zwischen den Rippen 44 verbleibende Freiräume der Durchgangsbohrung 43 im Steg 42 gewährleisten bei geöffnetem Tränkeventil 21 ein Hindurchfließen des aus demselben herausfließenden Wassers durch das Rohr 35 zur feststehenden Wasserauffangschale 24.

Die Länge des Betätigungshebels 25, insbesondere des Rohrs 35, ist so bemessen, dass ein offenes, unteres Ende 45 des Rohrs 35 mit geringem Abstand über der tiefsten Stelle 27 am Boden der Wasseraufnahmemulde 26 endet (Fig. 2). Dieser Abstand ist vorzugsweise so gewählt, dass nur eine Verschwenkung des Betätigungshebels 25 in einem bestimmten Ausmaß (Schwenkwinkel) gegenüber der unverschwenkbaren Wasserauffangschale 24 möglich ist. Auf diese Weise kann über die entsprechende Ausbildung der Wasseraufnahmemulde 26 der Wasserauffangschale 24 und ihre feste Anordnung unter der Wasserversorgungsleitung 20 die Wasserabgabemenge des Tränkeventils 21 begrenzt werden. Es können so handelsübliche Tränkeventile 21 mit einer den Wasserbedarf größerer Tiere deckenden großen Wasserdurchflussrate zur Aufzucht von jungen Tieren, insbesondere Putenküken, ohne eine Gefahr des Überlaufens der Wasserauffangschale 24 verwendet werden.

Der Betätigungshebel 25 weist vorzugsweise eine von der Wasserauffangschale 24 abweichende, hellere Farbe auf. Beispielsweise kann der Betätigungshebel 25 gelb ausgebildet sein. Die gelbe Farbe, insbesondere wenn ein Signalgelb verwendet wird, übt eine gewisse Lockwirkung auf die Tiere aus, die dazu führt, dass frisch eingestallte, unerfahrene Küken, insbesondere Putenküken, quasi spielerisch das jeweilige Tränkeventil 21 öffnen können, wenn sie aus Neugier den Betätigungshebel 25 berühren, der dadurch aufgrund seiner Leichtgängigkeit das Tränkeventil 21 öffnet.

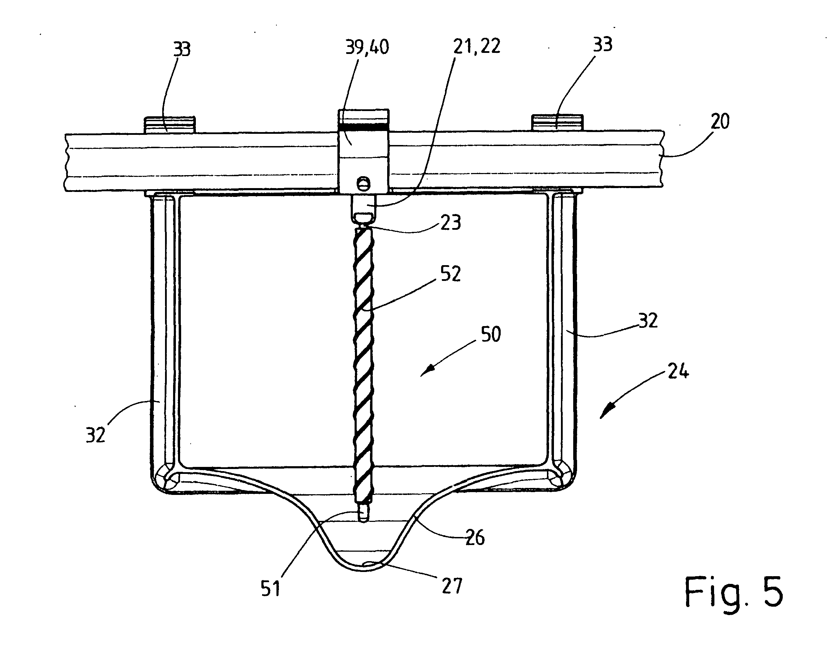

Die Fig. 5 zeigt den Betätigungshebel 50 nach einem alternativen Ausführungsbeispiel der Erfindung. Der Betätigungshebel 50 ist stangenartig ausgebildet, also im Gegensatz zum Betätigungshebel 25 nicht hohl. Der Betätigungshebel 50 ist lediglich am aus dem Gehäuse 22 des Tränkeventils 21 herausragenden Betätigungsende 23 des Ventilstifts befestigt. Diese Befestigung erfolgt derart, dass in der oberen Stirnseite des Befestigungshebels 50 sich eine Sackbohrung befindet, in die der untere Bereich des Betätigungsendes 23 mit Vorspannung einschiebbar ist. Auf diese Weise kommt eine zwar lösbare, aber im Übrigen feste Verbindung des Betätigungshebels 50 mit dem Betätigungsende 23 zustande. Die Folge ist, dass beim Verschwenken des Betätigungshebels 50 gleichzeitig das Betätigungsende 23 des Ventilsstifts verschwenkt und dadurch das Tränkeventil 21 geöffnet wird. Die Länge des Betätigungshebels 50 ist so bemessen, dass dieser mit einem freien (unteren) Ende 51 mit geringem Abstand über der tiefsten Stelle 27 am Boden der unverschwenkbaren Wasseraufnahmemulde 26 endet (Fig. 5). Der Betätigungshebel 50 ist rundum beweglich, nämlich beliebig in alle Richtungen verschwenkbar. Dabei wird der Schwenkwinkel des Betätigungshebels 50 wird begrenzt durch einen Anschlag des unteren freien Endes 51 an der feststehend unter der Wasserversorgungsleitung 20 befestigten Wasseraufnahmemulde 26 der Wasserauffangschale 24.

Der Betätigungshebel 50 ist vorzugsweise aus Kunststoff gebildet, und zwar als massives Kunststoffteil. Es ist aber auch denkbar, den Betätigungshebel 50 aus Stahl, insbesondere rostfreiem Edelstahl, zu bilden. Vorzugsweise ist auch der Betätigungshebel 50 mit einer auffälligen Farbe versehen, vorzugsweise gelb bzw. signalgelb. Dadurch übt auch der Betätigungshebel 50 eine Lockwirkung auf die Tiere, und zwar insbesondere junge Puten, aus, die dadurch zur Betätigung des Tränkeventils 21 animiert werden.

Ist das Tränkeventil 21 durch ein Verschwenken des Betätigungshebels 50 geöffnet, fließt das aus dem Tränkeventil 21 unten austretende Wasser außen am Betätigungshebel 50 entlang in die relativ zum Betätigungshebel 50 unbewegliche Wasseraufnahmemulde 26 der Wasserauffangschale 24. Das Wasser haftet dabei durch Adhäsion an der äußeren Mantelfläche des Betätigungshebels 50 an, so dass das Wasser vollständig in der Wasserauffangschale 24 mündet und nicht umherspritzt. Der in der Fig. 5 gezeigte Betätigungshebel 50 weist an seiner äußeren, zylindrischen Mantelfläche eine umlaufende Spirale 52 auf. Die Spirale 52 steht gegenüber der im Übrigen glatten Mantelfläche des Betätigungshebels 50 nach außen vor. An der Spirale 52 wird das Wasser von oben nach unten am Betätigungshebel 50 entlanggeführt und so zuverlässig in die Wasserauffangschale 24 geleitet.

Durch das außen am Betätigungshebel 50 entlangfließende Wasser erfolgt eine ständige Reinigung des Betätigungshebels 50, so dass die in der Fig. 5 gezeigte Tiertränke besonders hohen hygienischen Anforderungen gerecht wird.

## Patentansprüche

1. Tiertränke für insbesondere Geflügel, wie Puten, Hühner, Küken oder dergleichen, mit mindestens einem einer Wasserversorgungsleitung (20) zugeordneten Tränkeventil (21), das einen zum Öffnen des Tränkeventils (21) verschwenkbaren Ventilstift aufweist, mit einem dem Ventilstift zugeordneten Betätigungsmittel, wodurch der Ventilstift in eine die Wasserabgabe aus dem Tränkeventil (21) zulassende Stellung verschwenkbar ist und mit mindestens einer dem jeweiligen Tränkeventil (21) zugeordneten Wasserauffangschale (24, 46), **dadurch gekennzeichnet, dass** das Betätigungsmittel um eine feststehende Schwenkachse (36) verschwenkbar ist, die durch eine Längsmittelachse des Tränkeventils (21) verläuft.

2. Tiertränke nach Anspruch 1, **dadurch gekennzeichnet, dass** die Schwenkachse (36) relativ zum Tränkeventil (21) ortsunveränderlich ist, vorzugsweise durch eine Längsmittelachse des Ventilstifts verläuft, insbesondere etwa horizontalgerichtet quer zur Längsachse der Wasserversorgungsleitung (20) verläuft.

3. Tiertränke nach einem der vorhergehenden Ansprüche, **dadurch gekennzeichnet, dass** die Schwenkachse (36) integraler Bestandteil eines Befestigungsteils (39) ist, das vorzugsweise lösbar mit der Wasserversorgungsleitung (20) verbunden ist.

4. Tiertränke nach einem der vorhergehenden Ansprüche, **dadurch gekennzeichnet, dass** das vom Tränkeventil (21) abgegebene Wasser innen durch das Betätigungsmittel strömt, wobei vorzugsweise das Betätigungsmittel als ein länglicher Betätigungshebel (25) ausgebildet ist, der ein längliches Rohr (35) aufweist, durch das das vom Tränkeventil (21) abgegebene Wasser hindurchströmt.

5. Tiertränke nach einem der vorhergehenden Ansprüche, **dadurch gekennzeichnet, dass** das Betätigungsmittel als ein fest mit einem Betätigungsende (23) des Ventilstifts verbundener stangenartiger Betätigungshebel (50) ausgebildet ist, an dem außen vom Tränkeventil abgegebenes Wasser entiangströmt.

6. Tiertränke nach einem der vorhergehenden Ansprüche, **dadurch gekennzeichnet, dass** ein oberer Endbereich des Betätigungshebels (25), insbesondere des Rohrs (35), derart einem aus einem Gehäuse (22) des Tränkeventils (21) herausragenden Betätigungsende (23) des Ventilstifts zugeordnet ist, dass durch Verschwenken des Betätigungshebels (25) der Ventilstift zum Öffnen des Tränkeventils (21) verschwenkbar ist, und vorzugsweise der Betätigungshebel (25) im Bereich eines oberen Endes des Rohres (35) an das Betätigungsende (23) des Ventilstifts des Tränkeventils (21) ankuppelbar ist.

7. Tiertränke nach einem der vorhergehenden Ansprüche, **dadurch gekennzeichnet, dass** der Betätigungshebel (25) derart um die Schwenkachse (36) kippbar an der Wasserversorgungsleitung (20) gelagert ist, dass der Betätigungshebel (25) selbständig, insbesondere schwerkraftbedingt, in eine vorzugsweise senkrechte Stellung zurückkehrt in der der Ventilstift unbetätigt und das Tränkeventil (21) geschlossen ist.

8. Tiertränke nach einem der vorhergehenden Ansprüche, **dadurch gekennzeichnet, dass** ein unteres Ende des Betätigungsmittels sich bis in eine Wasseraufnahmemulde (26, 47) der Wasserauffangschale (24, 46) hinein erstreckt.

9. Tiertränke nach einem der vorhergehenden Ansprüche, **dadurch gekennzeichnet, dass** die Wasserauffangschale (24) über eine oben offene Wasseraufnahmemulde (26) verfügt, die sich mit dem Wasserstand ändernde Querschnittsformen aufweist.

10. Tiertränke nach Anspruch 9, **dadurch gekennzeichnet, dass** die Wasseraufnahmemulde (26) in der Nähe ihres Bodens einen etwa kreisrunden Querschnitt aufweist und darüber der Querschnitt der Wasseraufnahmemuide (26) unrund, vorzugsweise elliptisch bzw. oval, ist, wobei vorzugsweise der unrunde Querschnitt der Wasseraufnahmemulde sich zu einem oberen Rand (28) hin vergrößert, und sich dabei gegebenenfalls das Verhältnis der längeren Achse (29) zur kürzeren Achse (30) des ovalen bzw. elliptischen Querschnitts vergrößert.

11. Tiertränke nach einem der vorhergehenden Ansprüche, **dadurch gekennzeichnet, dass** die Wasseraufnahmemulde (26) der Wasserauffangschale (24) sowie die Länge und/oder der Durchmesser des Rohrs (35) bzw. der Stange des Betätigungshebels (50) so bemessen bzw. aufeinander abgestimmt sind, dass durch ein unteres Ende (45) des Rohrs (35) oder die Stange der Schwenkwinkel des Betätigungshebels (25, 50) festlegbar bzw. begrenzbar ist.

## Claims

1. Drinking trough for, in particular, poultry, such as turkeys, chickens, chicks or the like, having at least one drinking valve (21), which is assigned to a water-supply line (20) and has a valve pin which can be pivoted in order to open the drinking valve (21), actuating means assigned to the valve pin, it being possible to pivot the valve pin into a position which allows water to be discharged from the drinking valve (21), and having at least one water-collecting bowl (24, 46) assigned to the respective drinking valve (21), **characterized in that** the actuating means can be pivoted about a fixed pivot axis (36) which runs through a longitudinal center axis of the drinking valve (21).

2. Drinking trough according to Claim 1, **characterized in that** the pivot axis (36) assumes a fixed position relative to the drinking valve (21), preferably running through a longitudinal center axis of the valve pin, in particular being directed approximately horizontally and transverse to the longitudinal axis of the water-supply line (20).

3. Drinking trough according to one of the previous Claims, **characterized in that** the pivot axis (36) is an integral component of a fastening part (39), which is connected to the water-supply line (20) in a preferably detachable manner.

4. Drinking trough according to one of the previous Claims, **characterized in that** the water discharged by the drinking valve (21) flows through the inside of the actuating means, the actuating means being designed preferably as an elongate actuating lever (25) which has an elongate tube (35) through which the water discharged by the drinking valve (21) flows.

5. Drinking trough according to one of the previous Claims, **characterized in that** the actuating means is designed as a rod-like actuating lever (50) which is firmly connected to an actuating end (23) of the valve pin and along the outside of which water discharged by the drinking valve flows.

6. Drinking trough according to one of the previous Claims, **characterized in that** a top end region of the actuating means (25), in particular of the tube (35), is assigned to an actuating end (23) of the valve pin, said actuating end projecting out of a housing (22) of the drinking valve (21), such that, by virtue of the actuating means (25) being pivoted, the valve pin can be pivoted in order to open the drinking valve (21), and preferably such that the actuating lever (25) can be coupled to the actuating end (23) of the valve pin of the drinking valve (21) in the region of a top end of the tube (35).

7. Drinking trough according to one of the previous Claims, **characterized in that** the actuating lever (25) is mounted on the water-supply line (20) so that it can be tilted about the pivot axis (36) in such a manner that the actuating lever (25) returns automatically, in particular gravity-induced, to a preferably vertical position in which the valve pin is non-actuated and the drinking valve (21) is closed.

8. Drinking trough according to one of the previous Claims, **characterized in that** a bottom end of the actuating means extends into a water-accommodating hollow (26, 47) of the water-collecting bowl (24, 46).

9. Drinking trough according to one of the previous Claims, **characterized in that** the water-collecting bowl (24) has a water-accommodating hollow (26) open at the top which has cross sections that vary in shape with the water level.

10. Drinking trough according to Claim 9, **characterized in that** the water-accommodating hollow (26) has an approximately circular cross section in the vicinity of its base and, above the latter, the cross section of the water-accommodating hollow (26) is noncircular, preferably elliptical or oval, with the noncircular cross section of the water-accommodating hollow preferably increasing in size in the direction of a top border (28) and that thereby the ratio of the longer axis (29) to the shorter axis (30) of the oval or elliptical cross section increases as the case may be.

11. Drinking trough according to one of the preceding Claims, **characterized in that** the water-accommodating hollow (26) of the water-collecting bowl (24) and the length and/or diameter of the tube (35) or rod of the actuating lever (50) are sized or co-coordinated with each other such that the pivoting angle of the actuating lever (25, 50) can be set or limited by a bottom end (45) of the tube (35) or by the rod.

## Revendications

1. Abreuvoir pour animaux, notamment pour volailles comme des dindes, poules, poussins ou similaires, comportant au moins un robinet d'abreuvage (21) associé à une conduite d'alimentation en eau (20) et comportant une première tige de robinet pivotable pour ouvrir le robinet d'abreuvage (21), un moyen d'actionnement associé à la tige de robinet, grâce auquel la tige de robinet peut être pivotée dans une position permettant le déversement d'eau hors du robinet d'abreuvage (21), et au moins une cuve de récupération d'eau (24, 46) associée au robinet d'abreuvage respectif (21), **caractérisé en ce que** le moyen d'actionnement peut pivoter autour d'un axe de pivotement fixe (36) qui traverse un axe médian longitudinal du robinet d'abreuvage (21).

2. Abreuvoir pour animaux selon la revendication 1, **caractérisé en ce que** l'axe de pivotement (36) ne peut pas changer de place par rapport au robinet d'abreuvage (21), traverse de préférence un axe médian longitudinal de la tige de robinet, notamment en alignement approximativement horizontal transversalement par rapport à l'axe longitudinal de la conduite d'alimentation en eau (20).

3. Abreuvoir pour animaux selon une des revendications précédentes, **caractérisé en ce que** l'axe de pivotement (36) fait partie intégrante d'un élément de fixation (39) qui est relié de préférence de manière amovible à la conduite d'alimentation en eau (20).

4. Abreuvoir pour animaux selon une des revendications précédentes, **caractérisé en ce qu'**on fait couler l'eau déversée par le robinet d'abreuvage (21) à l'intérieur à l'aide du moyen d'actionnement, le moyen d'actionnement se présentant de préférence sous forme d'un levier d'actionnement allongé (25) comportant un tuyau allongé (35) par lequel passe l'eau déversée par le robinet d'abreuvage (21).

5. Abreuvoir pour animaux selon une des revendications précédentes, **caractérisé en ce que** le moyen d'actionnement est réalisé sous la forme d'un levier d'actionnement (50) en forme de barre relié fixement à une extrémité d'actionnement (23) de la tige de robinet et le long duquel s'écoule l'eau déversée à l'extérieur par le robinet d'abreuvage.

6. Abreuvoir pour animaux selon une des revendications précédentes, **caractérisé en ce qu'**une zone terminale supérieure du levier d'actionnement (25), notamment du tuyau (35), est associée à une extrémité d'actionnement (23) de la tige de robinet dépassant d'un boîtier (22) du robinet d'abreuvage (21) de manière à ce qu'en faisant pivoter le levier d'actionnement (25), on puisse faire pivoter la tige de robinet pour ouvrir le robinet d'abreuvage (21) et à ce que le levier d'actionnement (25) puisse de préférence être couplé, au niveau d'une extrémité supérieure du tuyau (35), à l'extrémité d'actionnement (23) de la tige de robinet du robinet d'abreuvage (21).

7. Abreuvoir pour animaux selon une des revendications précédentes, **caractérisé en ce que** le levier d'actionnement (25) s'appuie autour de l'axe de pivotement (36) de manière à pouvoir basculer sur la conduite d'alimentation en eau (20) de manière à ce que le levier d'actionnement (25) revienne automatiquement, notamment du fait de la gravité, vers une position de préférence verticale dans laquelle la tige de robinet n'est pas actionnée et le robinet d'abreuvage (21) est fermé.

8. Abreuvoir pour animaux selon une des revendications précédentes, **caractérisé en ce qu'**une extrémité inférieure du moyen d'actionnement s'étend jusque dans un bassin de récupération d'eau (26, 47) de la cuve de récupération d'eau (24, 46).

9. Abreuvoir pour animaux selon une des revendications précédentes, **caractérisé en ce que** la cuve de récupération d'eau (24) est équipée d'un bassin de récupération d'eau ouvert en haut (26) qui présente des formes de section transversale changeant en fonction du niveau de l'eau.

10. Abreuvoir pour animaux selon une des revendications précédentes, **caractérisé en ce que** le bassin de récupération d'eau (26) présente, à proximité de son fond, une section transversale approximativement circulaire et que, de plus, la section transversale du bassin de récupération d'eau (26) n'est pas ronde mais de préférence elliptique ou ovale, tandis que la section transversale non ronde du bassin de récupération d'eau s'agrandit de préférence en direction d'un bord supérieur (28) et que le rapport entre l'axe le plus long (29) et l'axe le plus court (30) de la section transversale ovale ou elliptique augmente alors le cas échéant.

11. Abreuvoir pour animaux selon une des revendications précédentes, **caractérisé en ce que** le bassin de récupération d'eau (26) de la cuve de récupération d'eau (24) ainsi que la longueur et/ou le diamètre du tuyau (35) ou de la barre du levier d'actionnement (50) sont dimensionnés ou définis l'un en fonction de l'autre de manière à ce que l'angle de pivotement du levier d'actionnement (25, 50) puisse être établi ou limité par une extrémité inférieure (45) du tuyau (35) ou par la barre.
